# EUROPEAN PATENT APPLICATION

(11) **EP 3 272 716 A1**
(43) Date of publication of application: **24.01.2018**
(21) Application number: 16380029.5
(22) Date of filing: 19.07.2016
(51) Int. Cl.: C02F 3/02, C02F 3/12, C02F 3/00

(54) **BIOLOGICAL REACTION WITH STORAGE SYSTEM OF ENERGY GENERATED BY A WIND FARM, A PHOTOVOLTAIC SOLAR POWER PLANT OR A HYBRID OF THE TWO FOR THE TREATMENT AND REUSE OF URBAN, AGRICULTURAL OR INDUSTRIAL WASTE WATERS**

(71) Applicant: Aguas Tecnologicas, S.L. CIF: B87097085, 28028 Madrid (CP) (ES)
(72) Inventor: Buendia De Lera, Pedro Francisco, 28028 Madrid (ES); Buendia De La Lera, Manuel, 28028 Madrid (ES)

(57) **Abstract**

Consists of a biological reaction process for the treatment of water and the achievement of conditions for its reuse. With an energy storage system whose energy is produced by a wind farm, or a photovoltaic solar power plant, or a hybrid installation of the two. A cycle control system is incorporated. The electric power supply for the pumping of filling, of evacuating and of blower comes directly from said installations and from the energy storage system. The procedure must be understood as the starting operation of the cycle of the biological reaction and of the control of the stages thereof based on the value of the energy loaded to the storage system, on the value of the wind strength or on the value of the instantaneous solar radiation. As an alternative mode of the invention, this process is also contemplated with a single tank: SBR tank.

## Description

Biological reaction with the storage system of energy generated by a wind farm, a photovoltaic solar power plant or a hybrid of the two for the treatment and reuse of urban, agricultural or industrial waste waters.

### TECHNICAL FIELD

The invention consists of a process for the treatment of urban, agricultural or industrial waste waters and the achievement of necessary conditions for their reuse.

### BACKGROUND INFORMATION

### Biological Treatment of Wastewater:

Wastewater can be defined as a liquid waste collected through the sewerage network for shipment to a sewerage treatment plant (Mujeriego, 1990).

According to their origin, wastewaters are classified as follows:
1.-Domestic or Urban. 2.- Industrial 3.- Agricultural. 4.-Illegal dumping, infiltrations. 5.- Storm water.

In general, domestic wastewater contains 99.9% of water. 70% of the solid material is composed of organic substances such as proteins, fats and carbohydrates; while the remaining 30% is insoluble mineral material and inorganic substances such as sand, clay and gravel.

Wastewater organic compounds have at least one carbon atom in their structure. These atoms can be oxidized either chemically or biologically to produce carbon dioxide (CO2).

Wastewater biological treatment systems are based on the interaction and metabolism of microorganisms. These processes depend on the ability of the microbial community to use water compounds. The biological process constitutes a diverse ecosystem which feeds directly from the wastewater that enters the system and that depends on the availability of 02, pH and mixing conditions.

The activated sludge process is comprised of bacteria, protozoa, fungi, algae and filamentous organisms. Protozoa, filamentous organisms and bacteria actively take part in the biological treatment of wastewater (Muyima et al., 1997).

The biological treatment of wastewater is carried out in reactors specially designed to keep the microorganisms under controlled conditions. Microbial reactions can be performed as follows:
1.-Under aerobic conditions: presence of dissolved oxygen.
2.-Under anoxic conditions: absence of dissolved oxygen, presence of nitrates.
3.-Under anaerobic conditions: absence of dissolved oxygen and absence of nitrates.

Likewise, the biomass used in the treatment may be kept in suspension or adhered to a support material (Lee, 1996; Droste, 1997).

Reactors can operate in a continuous-flow system or in a batch-flow system (filling-emptying). The difference between the two of them is that the continuous-flow reactor operates in a spatial sequence, while the batch-flow reactor (filling-emptying) follows a time sequence.

Sequential Biological Reactor (SBR) technology consists of batch-flow reactors where the entire process of filling, reacting, decanting and emptying is carried out in the same tank.

The regulation at European level of urban waste water treatment is contained in Council Directive 91/271 of 21 May 1991 on waste water treatment. The directive affects population centres according to the number of inhabitants. Waste waters must be treated even in towns with an equivalent population of less than 2000 inhabitants.

As an alternative to the available technologies, biological reaction with the storage system of energy produced by a wind farm, a photovoltaic solar power plant or a hybrid of the two for the treatment and reuse of urban, agricultural or industrial waste waters, allows for treatment of waste water in a model that is sustainable due to the use of renewable energy, and also enables its use in areas where the conventional electrical grid is not present.

The use of photovoltaic solar energy in patents related to the treatment of water is regarded as a backup for pumping systems-CN100546922, EP2213627-or for the supply of the disinfection system UV-US2010155339-or for treatment through electro-oxidation-ES2389202B1, but it is not integrated in the biological treatment process.

The aim of the present invention is to provide an alternative to the proposed procedures for the treatment and reuse of urban, agricultural or industrial waste water that can meet the requirements for its reuse, improving the energy sustainability thereof and allowing its implementation in areas where the conventional electrical grid is not present.

### INVENTION DESCRIPTION

The invention consists of the circulation of the water to be treated from a tank or supply tank to a tank where a biological reaction is performed, in which a wind farm or a photovoltaic solar power plant has been integrated or a hybrid of the two along with a System of Storage for the Energy produced by the wind, the solar photovoltaic or the hybrid power plant. The invention also allows for an another alternative mode of operation in a single tank with SBR technology.

The nature of the procedure results from the fact that the electric current supplied to the supply tank, and to the biological reaction tank, or to the SBR tank, comes directly from the energy storage system and from the wind farm, the solar photovoltaic power plant or the hybrid installation of the two; and from the fact that the procedure includes the beginning of the cycle and the maintenance of the stages of the operating cycle: fill-reaction-decantation-empty, based on the load of the energy storage system, based on the value of the wind strength in the case of the wind farm, or based on the value of the instantaneous solar radiation in the case of photovoltaic solar power plant, or based on both values in the case of the hybrid power plant.

Based on the load of the Energy Storage System, based on the value of the wind strength or based on the value of the instantaneous solar radiation, the cycle starts with the water to be treated entering from the Supply Tank to the Biological Reaction Tank (Filling stage), followed by the oxidation reaction (Reaction stage), then leaving the water settled (decanting stage), and finishing with the idling of the water already treated (idling stage). In this way, the water to be treated (Influent) flows out being already treated for its reuse (Effluent). The same procedure is described for the case of a single tank such as the one of the SBR technology.

In the invention, a power plant is described for the treatment and reuse of urban, agricultural or industrial waste water which allows meeting the requirements necessary for its reuse, which includes a Supply Tank of water to be treated, connected to the inflow of the Biological Reaction Tank. In the invention, it is also described the SBR system with a single tank. The power plant is characterized by the fact that it has an Energy Storage System whose energy is produced by a wind farm, solar photovoltaic power plant or a hybrid installation which is integrated with the Supply Tank and with the Biological Reaction tank, or with the single SBR tank and a wind strength meter or a solar probe to measure the solar radiation; and it also includes a Cycle Control System to regulate the beginning of the operating cycle and the following stages of the cycle.

The Energy Storage System whose energy is produced by a wind farm, solar photovoltaic power plant or the hybrid installation of the two as proposed in the invention would be small-scale storage systems such as the chemical storage systems: Hydrogen, capacitor batteries, electrochemical batteries, flow electrochemical batteries, also called redox flow batteries. Any other storage system such as the SMES superconductor magnetic field system, electrochemical capacitors, ultracapacitors, load management system can be applied in intelligent energy grids. Any of these storage systems, whether they are small scale or large scale, will be valid for the invention based on the amount of energy to be stored, energy that in turn depends on the volume of water to be treated. Other storage systems are those of a mechanical nature such as the hydraulic system by means of pumping, compressed air - CAES and inertia flywheels; and those of a thermal nature.

The Cycle Control System based on the load of the Energy Storage System; based on the value of the wind strength; or based on the instantaneous solar radiation, measured by the solar radiation meter or the solar probe, controls a water pumping unit to extract the water from the Supply Tank and it also controls another pumping unit for the idling of the Biological Reaction tank. Likewise, the Cycle Control System based on the load of the Storage System, based on the value of the wind strength or based on the instantaneous solar radiation, controls a blower pump unit which complete the oxidation reaction stage, stopping its function for the beginning of the decanting stage and subsequent idling the Biological Reaction Tank. An alternative mode of implementing the invention is in a single tank with SBR technology.

Account must be taken, in the procedure of the invention, of the calculation of the volume of the Supply Tank and the volume of the Biological Reaction Tank based on the volume of the water to be treated. Based on this volume, the necessary load in the System of storage, the number and power developed by the wind turbines, the surface and the arrangement of the solar modules will be calculated for their connection to the Supply Tank, to the Biological Reaction Tank, and in the alternative mode to the SBR Tank.

### BRIEF DESCRIPTION OF DRAWINGS

Figure 1: shows a diagram of a **BIOLOGICAL REACTION WITH THE ENERGY STORAGE SYSTEM** process.
Figure 2: shows a diagram of the conventional process of the biological treatment through the continuous-flow reactor, assisted by mains electricity supply.
Figure 3: shows the diagram (according to Barajas, 2002) of the conventional process of the biological treatment through the batch-flow reactor, assisted by mains electricity supply.
Figure 4: shows the diagram of a **BIOLOGICAL REACTION WITH THE ENERGY STORAGE SYSTEM** process described in the present invention, in more detail than in Figure 1.
Figure 5: shows the diagram of a **BIOLOGICAL REACTION WITH THE ENERGY STORAGE SYSTEM** process described in the present invention, in more detail than in Figure 1 applied to a single SBR tank.
Figure 6: schematically shows a power plant adapted to the implementation of the **BIOLOGICAL REACTION WITH THE ENERGY STORAGE SYSTEM** process.
Figure 7: schematically shows a power plant adapted to the implementation of the **BIOLOGICAL REACTION WITH THE ENERGY STORAGE SYSTEM** process with a single SBR tank. ..."

### PRIORITY METHOD FOR CARRYING OUT THE INVENTION

### Detailed description and the basis for the invention's claims:

The **BIOLOGICAL REACTION WITH THE ENERGY STORAGE SYSTEM** described provides a procedure for the treatment and reuse of urban, agricultural or industrial waste water.

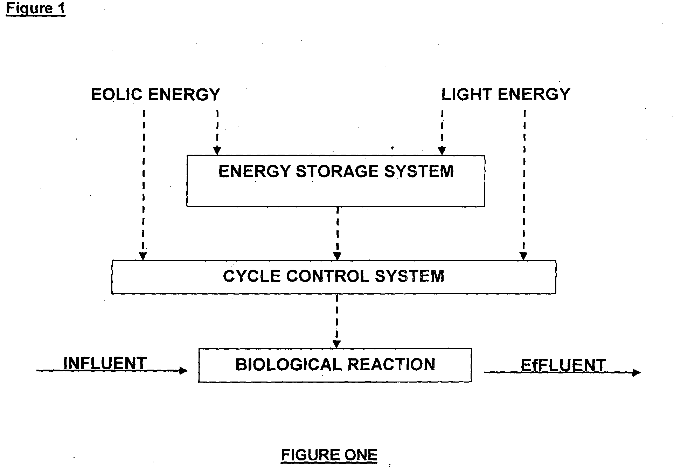

Figure 1: shows a diagram of a **BIOLOGICAL REACTION WITH THE ENERGY STORAGE SYSTEM** process in which the urban, agricultural or industrial waste waters from a previous treatment system (refine, sands and fats elimination), enter into a process of Biological Reaction and they are treated in order to become water for reuse, using wind energy, light energy, a Storage System of such Energies and a Cycle Control System.

In the **BIOLOGICAL REACTION WITH THE ENERGY STORAGE SYSTEM** process described in the present invention, a wind farm, solar photovoltaic power plant or a hybrid installation of the two has been installed with a System of Storage for the produced Energy, and with a Cycle Control System, being characterized said procedure due to the following facts:
1.- The power supply of the process: to the Cycle Control System, to the Supply Tank and to the Biological Reaction Tank or the SBR Tank comes directly from the Energy Storage System, the wind farm, the solar photovoltaic power plant or the hybrid installation of the two.
2.- The process includes the beginning of the cycle and the maintenance of the stages of the operating cycle: Fill-Reaction-Decantation-Idle, based on the load of the Energy Storage System, based on the value of the wind strength in the case of the wind farm, or based on the value of the instantaneous solar radiation in the case of photovoltaic solar power plant.

The **BIOLOGICAL REACTION WITH THE ENERGY STORAGE SYSTEM** process described in the present invention shares with the conventional process assisted by mains electricity supply that they both use the biological treatment technology.

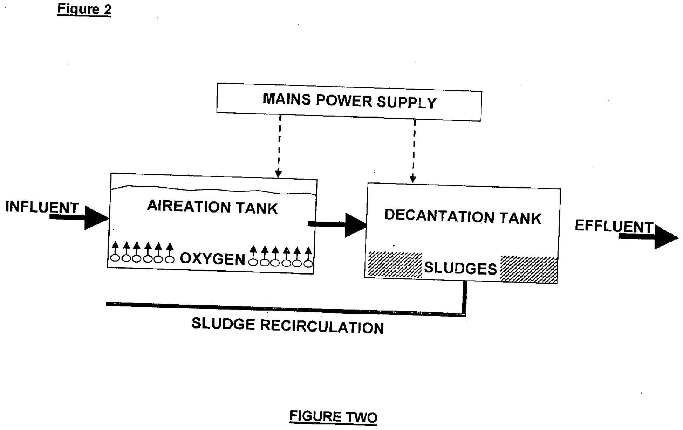

Figure 2 shows a diagram of the conventional process of the biological treatment through a continuous-flow reactor, assisted by mains electricity supply for the treatment of waste water. Said process is characterized by 1.- the input of energy to the process is in the form of mains electricity supply. 2.-The cycle and its stages are carried out in two tanks: Aeration Tank and Decantation Tank. 3.-The beginning of the cycle and its stages are programmed based on a spatial sequence, with aa constant mains electricity supply for the whole cycle.

This process consists of uploading a volume of influent into a tank (aeration tank) and applying mains electricity supply to the oxygen blower pumps until the desired final value of purification or treatment and/or disinfection is reached. Subsequently, once the treatment is finished, mains electricity supply will be applied to the idle pumps and then the water will be unloaded into a tank (Decantation Tank). After a certain time, after finishing the decantation treatment, mains electricity supply will be applied to the idle and recirculation pumps of the sludge and the effluent treated will be idled and the sludge will be recirculated.

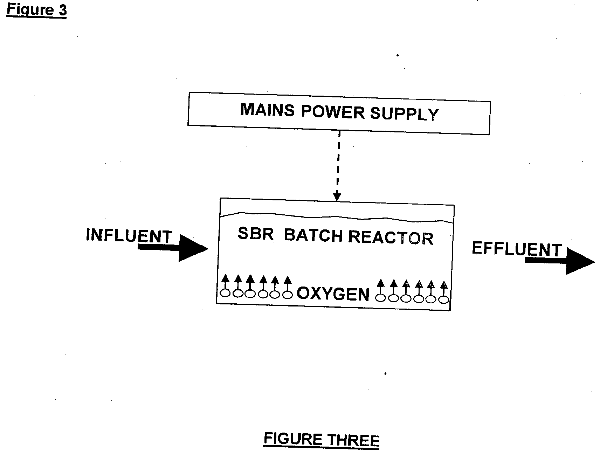

Figure 3 shows a diagram (according to Barajas, 2002) of the conventional process of the biological treatment through a SBR batch reactor in a single tank assisted by mains electricity supply for the treatment of waste water. Said process is characterized by 1.- the input of energy to the process is in the form of mains electricity supply. 2.-The cycle and its stages are carried out in a single tank. 3.-The beginning of the cycle and its stages are programmed based on a spatial sequence, with a constant mains electricity supply for the whole cycle.

This process consists of uploading a volume of influent into a tank and applying mains electricity supply during the stages of the cycle to the oxygen blower pumps until the desired final value of purification or treatment and/or disinfection is reached. Subsequently, once the treatment with oxygen is finished, the decanting stage starts in the same tank, to apply later a mains electricity supply to the idle pumps and idle the effluent treated.

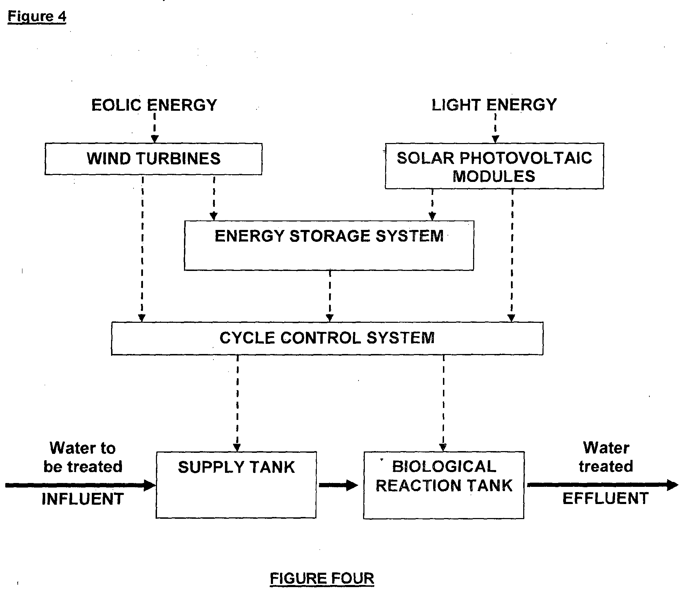

Figure 4 shows the diagram of the **BIOLOGICAL REACTION WITH THE ENERGY STORAGE SYSTEM** process described in the present invention, in greater detail than in Figure 1.

This process differs from the conventional one because:
1.-The energy input to the process is in the form of electric current coming from the Energy Storage System, the wind farm, the solar photovoltaic power plant or the hybrid installation of the two.
2.-The procedure is performed in two tanks: Supply Tank and Biological Reaction Tank.
3.-The beginning of the cycle and its stages is programmed and controlled by a Cycle Control System based on the load of the Energy Storage System; based on the value of the wind strength; or on the instantaneous solar radiation. The beginning of the cycle with the flow of the water to be treated from the Supply Tank to the Biological Reaction Tank is performed according to the load of the Energy Storage System; based on the value of the wind strength or on the instantaneous solar radiation. To this must be added that the programming of the cycle stages also depends on the load of the Energy Storage System; on the value of the wind strength or on the instantaneous solar radiation.

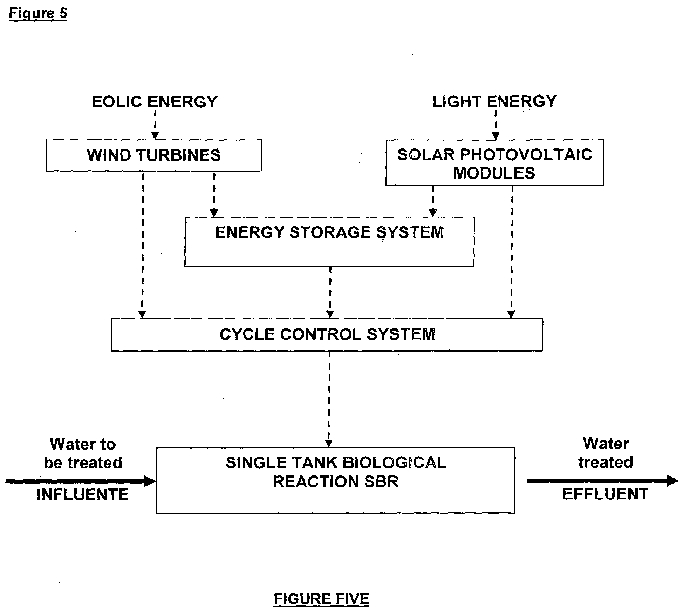

Figure 5 shows the diagram of the **BIOLOGICAL REACTION WITH THE ENERGY STORAGE SYSTEM** process described in the present invention, in greater detail than in Figure 1 and applied to a single SBR tank.

This process differs from the conventional one because:
1.-The energy input to the process is in the form of electric current coming from the Energy Storage System, the wind farm, the solar photovoltaic power plant or the hybrid installation of the two. The procedure is performed in a single SBR Tank.
2.- The beginning of the cycle and its stages is programmed and controlled by a Cycle Control System based on the load of the Energy Storage System; based on the value of the wind strength; or on the instantaneous solar radiation. The beginning of the cycle is performed according to the load of the Energy Storage System; based on the value of the wind strength or on the instantaneous solar radiation. To this must be added that the programming of the cycle stages also depends on the load of the Energy Storage System; on the value of the wind strength or on the instantaneous solar radiation.

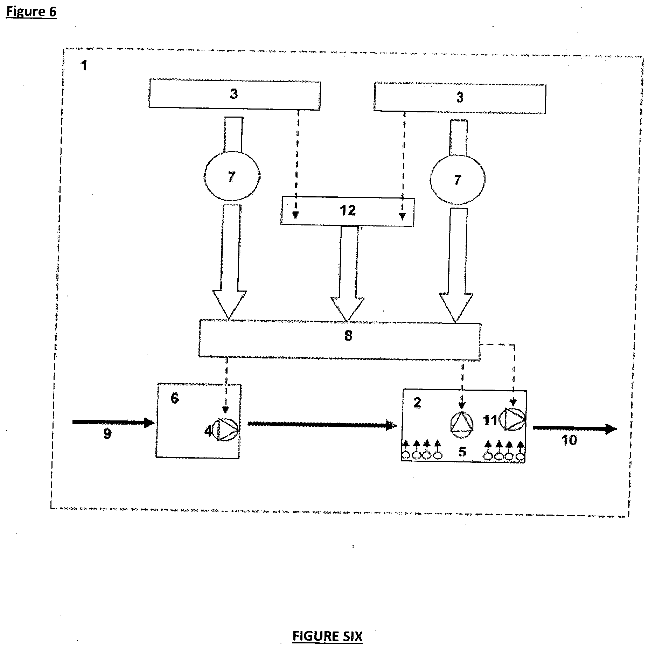

Figure 6 schematically shows a power plant (1) adapted to the implementation of the **BIOLOGICAL REACTION WITH THE ENERGY STORAGE SYSTEM** process with two tanks.

The process described in the present invention consists on treating a water flow, using energy from: An Energy Storage System (12), a wind farm, a photovoltaic solar power plant, or a hybrid installation of the two (3). The flow of water to be treated (9) arrives to a Supply Tank (6) in which urban, agricultural or industrial waste water has previously undergone a primary treatment of refine, sands and fats elimination, in such a way that it is possible to store in this Supply Tank the water to be treated during periods of wind absence, of insufficient solar radiation or of low level of load in the Energy Storage System. The energy of the wind and of the light energy which acts as an input of energy to the system, is transformed into electrical energy in a wind farm or in a photovoltaic solar power plant, by means of a wind turbine or by a set of photovoltaic solar modules (3), being this current the one which is supplied directly to the Supply Tank (6) and to the Biological Reaction Tank (2) or to the Energy Storage System (12). Through the programming of the cycle and its stages, in the oxidation reaction stage, it is possible to make a more adequate use of the available light or wind energy, during periods of high wind strength or high solar radiation. During the periods corresponding to zero radiation or zero wind, the supply tank is filled, starting at this moment the biological treatment and since the waste water is stored without oxygen, it remains in anoxic conditions. When the wind blow, the solar radiation, or the appropriate levels of load in the Energy Storage System are detected, the operating cycle starts with the filling of the Biological Reaction Tank by means of the filling pump (4) and the oxidation reaction stage coincides with the period of high wind strength or high solar radiation. Therefore, this wind or solar photovoltaic or hybrid installation is integrated with the Energy Storage System, the Cycle Control System, the Supply Tank and the Biological Reaction Tank. The Supply Tank is connected to the inlet area of the Biological Reaction Tank.

In order to guarantee the stability of the system and to avoid the non-implementation of the process with the consequent overflow of the Supply Tank or the standstill in one of the stages of the cycle due to lack of energy, any other means of generating the energy required by the system will be available, such as diesel fuel pumps or fuel gas pumps, or directly from the electric current supplied by the conventional electrical network.

The wind strength and the solar radiation are stochastic processes since the system is determined by both predictable actions and random elements that can be analysed in terms of probability, a Cycle Control System (8) has been established taking this into account. Depending on the value of the wind strength or on the instantaneous solar radiation and on the levels of energy stored in the Energy Storage System, this Cycle Control System acts on the beginning of the cycle and its stages.

The system includes a wind strength sensor (7) and a solar radiation meter or solar probe (7) that generates an electrical signal for the Cycle Control System. This Cycle Control System is also responsible for controlling the beginning of the cycle and its stages. When there is not enough wind strength or solar radiation or energy stored in the Energy Storage System, the operation of the system is stopped and the Supply Tank accumulates the waste water to be treated in anoxic conditions. The Cycle Control System, which allows the beginning of the cycle and its different stages according to the indicated values, controls a water pumping unit (4) to pour the water from the Supply Tank into the Biological Reaction tank, as well as it also controls another pumping unit (11) for extracting the already treated water (10) from the Biological Reaction tank, and it also controls a unit of blower pumps (5) which are activated in the oxidation reaction stage in the Biological Reaction tank. The pumping unit and the blower pumps include pumps which receive the electrical current from the described installation.

In any case, as mentioned above, for the overflow of the Supply Tank, any other means of generating the electrical energy required by the system are available, such as diesel fuel pumps, fuel gas pumps, or directly from the electricity supplied by the conventional electrical network, in order to start the cycle and its stages.

To avoid these problems of overflow, the installation must be designed and correctly sized according to the volume calculations of water to be treated. The calculation of the volume of the Supply Tank and the volume of the Biological Reaction Tank in terms of the volume of water to be treated must be taken into account in the description of the invention. Depending on this volume, they will be calculated the number of wind turbines and their power, the surface and layout of the solar modules and the capacity of the Energy Storage System connected to the Cycle Control System and to the Supply Tank, and to the Biological Reaction Tank.

Therefore, the volume of the Supply Tank and the volume of the Biological Reaction Tank will be calculated according to the volume of water to be treated, and depending on this, the energy needs will be calculated.

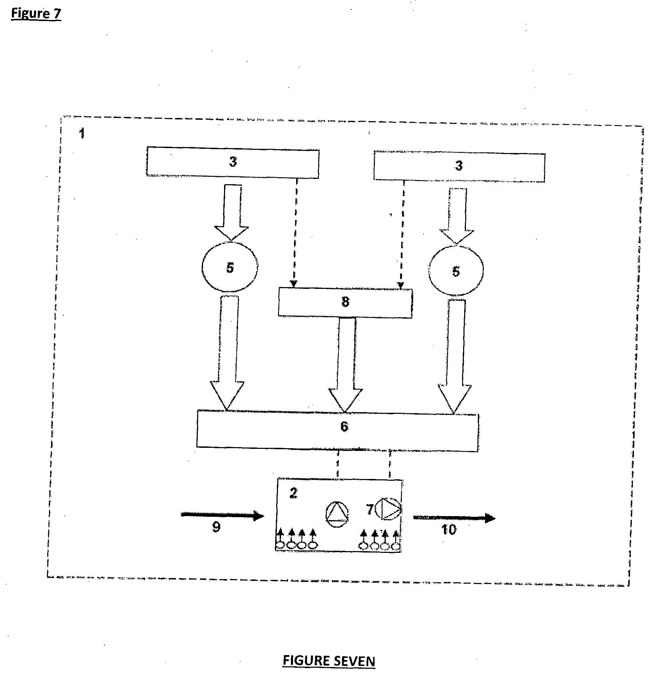

Figure 7 schematically shows a power plant (1) adapted to the implementation of the **BIOLOGICAL REACTION WITH THE ENERGY STORAGE SYSTEM** process with a single SBR Tank.

The process described in the present invention consists of treating a water flow, using energy from a wind farm, solar photovoltaic power plant or a hybrid installation of the two (3), or using the energy stored in an Energy Storage System (8), applicable to a single SBR Tank (2). The flow of water to be treated (9) arrives to a tank (2) in which urban, agricultural or industrial waste water has previously undergone a primary treatment of refinement, sands and fats elimination.

The energy of the wind and of the light energy which acts as an input of energy to the system, is transformed into electrical energy in a wind farm or in a photovoltaic solar power plant, by means of a wind turbine or by a set of photovoltaic solar modules (3), where this current is the one which is supplied directly to the SBR Tank (2) and to the Energy Storage System (8). Through the programming of the cycle and its stages, in the oxidation reaction stage, it is possible to make a more adequate use of the available light or wind energy, during periods of high wind strength or high solar radiation. Therefore, this wind or solar photovoltaic or hybrid installation is integrated with the Energy Storage System, the Cycle Control System, and the SBR Tank.

In order to guarantee the stability of the system and to avoid the non-implementation of the process with the consequent overflow of the Tank or the standstill in one of the stages of the cycle due to lack of energy, any other means of generating the energy required by the system will be available, such as diesel fuel pumps or fuel gas pumps, or directly from the electric current supplied by the conventional electrical network.

The wind strength and the solar radiation are stochastic processes since the system is determined by both predictable actions and random elements that can be analysed in terms of probability and taking this into account, a Cycle Control System (6) has been provided. Depending on the value of the wind strength or on the instantaneous solar radiation and on the levels of energy stored in the Energy Storage System, this Cycle Control System acts on the beginning of the cycle and its stages.

The system includes a wind strength sensor and a solar radiation meter or solar probe (5) that generates an electrical signal for the Cycle Control System. This Cycle Control System is also responsible for controlling the beginning of the cycle and its stages. The Cycle Control System, which allows the beginning of the cycle and its different stages according to the indicated values, controls a unit of blower pumps (4) which are activated in the oxidation reaction stage. It also controls another pumping unit (7) to extract the already treated water (10) from the SBR Tank. The pumping unit and the blower pumps include pumps which receive the electrical current from the described installation.

In any case, as mentioned above, for the overflow of the Tank, any other means of generating the electrical energy required by the system are available, such as diesel fuel pumps, fuel gas pumps, or directly from the electricity supplied by the conventional electrical network, in order to start the cycle and its stages.

To avoid these problems of overflow, the installation must be designed and correctly sized according to the volume calculations of water to be treated.

The calculation of the volume of the SBR Tank in terms of the volume of water to be treated must be taken into account in the description of the invention. Depending on this volume, calculations will be made of the number of wind turbines and their power, the surface and layout of the solar modules and the capacity of the Energy Storage System connected to the Cycle Control System and the SBR Tank.

Therefore, the volume of the SBR Tank will be calculated according to the volume of water to be treated, and depending on this, the energy needs will be calculated.

It is also necessary to apply a cleaning protocol of the installation in the power plant of Figure 6 with two tanks as in the power plant of Figure 7 with a SBR tank including a purge of the sludge generated in decantation.

## Claims

1. Procedure for the treatment of urban, agricultural or industrial waste water and for the achievement of conditions for its reuse, which consists of the circulation of the flow of the water to be treated (Influent) through a tank or several tanks (SBR tank, Supply Tank, Biological Reaction Tank) in which a biological reaction will be performed to obtain purified or treated water for its reuse (Effluent). The procedure aims to provide the energy required integrating a wind farm, or a photovoltaic solar power plant, or a hybrid installation of the two and an Energy Storage System whose energy is produced by the wind farm, the photovoltaic solar power plant, or the hybrid installation. The energy input in the process lies in the fact that: The electric current to the system: Cycle Control System, Supply Tank, Biological Reaction Tank and SBR Tank, comes directly from the wind farm, the photovoltaic solar power plant, a hybrid installation of the two and from an Energy Storage System whose energy is produced by the wind farm, the photovoltaic solar power plant, or the hybrid installation. The process includes the beginning of the cycle and the programming of its stages based on the load of the Storage System; on the value of the wind strength; or on the instantaneous solar radiation.

2. Procedure according to claim 1, which entails that the beginning of the cycle is programmed and controlled by a Cycle Control System which is based on: the load of the Energy Storage System; on the value of the wind strength; or on the instantaneous solar radiation. The beginning of the cycle is **characterized by** the water flow from the Supply Tank to a Biological Reaction tank in the process of two tanks. The beginning of the cycle in the process of a single SBR tank is **characterized by** the activation of the oxidation reaction.

3. Procedure according to the preceding claim because it includes the added operation, at the beginning of the cycle, of programming the cycle stages based on the load of the Energy Storage System; on the value of the wind strength; or on the instantaneous solar radiation.

4. Procedure according to the preceding claims of a Power Plant (1) described in Figure 6 for the purification or treatment of urban, agricultural or industrial waste water, Influent (9), and for the achievement of conditions to reuse the treated water, Effluent (10), consisting of a Cycle Control System (8), a Supply Tank (6), a Biological Reaction Tank (2), a wind farm, or a photovoltaic solar power plant, or a hybrid installation of the two (3) and an Energy Storage System (12). It has been integrated a wind strength sensor (7) and a solar radiation meter or solar probe (7) which generate an electrical signal for the Cycle Control System (8). This wind farm, or the photovoltaic solar power plant, or the hybrid installation of the two (3) is integrated with the Energy Storage System (12), with the Cycle Control System, with the Supply Tank and with the Biological Reaction Tank. The Supply Tank is connected to the inlet of the Biological Reaction Tank.

5. Procedure according to the preceding claims of a Power Plant (1) described in Figure 6 which consists of a Cycle Control System (8), which allows the beginning of the cycle and the programming of the different stages depending on the value of the energy loaded to the Energy Storage System (12), on the wind strength measured by a sensor (7), on the instantaneous solar radiation measured by the solar radiation probe (7) and controls a pumping unit (4) of water in order to pour said water from the Supply Tank (6) to the Biological Reaction Tank (2). This Cycle Control System also controls another pumping unit (11) to extract the already treated water (10) from the Biological Reaction Tank.

6. Procedure according to the preceding claims of a Power Plant (1) described in Figure 6 which consists of a Cycle Control System (8), which allows the beginning of the cycle and the programming of the different stages depending on the value of the energy loaded to the Energy Storage System (12), depending on the wind strength measured by a sensor (7), on the instantaneous solar radiation measured by the solar radiation probe (7), and controls a pumping unit (4) of water to pour said water from the Supply Tank (6) to the Biological Reaction Tank (2). This Cycle Control System also controls another pumping unit (11) to extract the already treated water (10) from the Biological Reaction Tank, and it also controls a unit of blower pumps (5) which are activated in the oxidation reaction stage in the Biological Reaction Tank.

7. Procedure according to the preceding claims of a power plant (1) described in Figure 6 which consists of the pumping unit and the blower pumps receiving the electric current from a wind farm, or from a photovoltaic solar power plant, or a hybrid installation of the two or from the Energy Storage System.

8. Alternative mode of carrying out the invention with a SBR Tank. A process according to the preceding claims 1, 2 and 3 of a Power Plant (1) described in Figure 7 for the treatment of urban, agricultural and industrial waste water, Influent (9), and for the achievement of conditions to reuse the treated water, Effluent (10), consisting of a Cycle Control System (6), a SBR Tank (2), a wind farm, or a photovoltaic solar power plant, or a hybrid installation of the two (3) and an Energy Storage System (8). There is a wind current sensor (5) and a solar irradiation meter or solar probe (5) that generates an electrical signal for the Cycle Control System (6). This wind farm, or the photovoltaic solar power plant, or the hybrid installation of the two (3) is integrated with the Energy Storage System (8), with the Cycle Control System
(6), and with the Tank SBR (2).

9. Procedure according to the preceding claims of a Power Plant (1) described in Figure 7 which consists of a Cycle Control System (6), which allows the beginning of the cycle and the programming of the different stages depending on the value of the energy loaded to the Energy Storage System (8), on the wind strength measured by a sensor (5), on the instantaneous solar radiation measured by the solar radiation probe (5), and controls a unit of blower pumps (4).

10. Procedure according to the preceding claims of a Power Plant (1) described in Figure 7 which consists of a Cycle Control System (6), which allows the beginning of the cycle and the programming of the different stages depending on the value of the energy loaded to the Energy Storage System (8), on the wind strength measured by a sensor (5), on the instantaneous solar radiation measured by the solar radiation probe (5), and controls a unit of blower pumps (4) which are activated in the oxidation reaction stage, and it controls a pumping unit (7) to extract the already treated water. (10).

11. Procedure according to the preceding claims of a Power Plant (1) described in Figure 7 which lies on the fact that the pumping unit and the blower pumps receive electric current from a wind farm or a solar photovoltaic power plant or a hybrid installation of the two or from the Energy Storage System.
